# EUROPÄISCHE PATENTANMELDUNG

(11) **EP 2 017 933 A2**
(43) Veröffentlichungstag der Anmeldung: **21.01.2009**
(21) Anmeldenummer: 08011978.7
(22) Anmeldetag: 03.07.2008
(51) Int. Cl.: H02G 3/04

(54) **Überbrückungsklammer zur Sicherung von Kabeln und Leitungen in Kabelführungskanälen**

(30) Priorität: 20.07.2007 DE 202007010127 U
(71) Anmelder: Tehalit GmbH, 67716 Heltersberg (DE)
(72) Erfinder: Nauerz, Uwe, 66851 Steinalben (DE); Schwarz, Jürgen, 67705 Trippstadt (DE)
(74) Vertreter: Patentanwälte Möll und Bitterich

(57) **Zusammenfassung**

Die vorliegende Erfindung betrifft eine Überbrückungskammer zur Sicherung von Kabeln und Leitungen in Kabelführungskanälen, umfassend einen Basiskörper (10), ein an der Fußseite des Basiskörpers (10) ausgebildetes Rastprofil (33) mit einem darin eingebrachten Schlitz (12) zur Befestigung der Klammer mit einem Unterteil (1) eines Kabelführungskanals, der von einem unteren Schenkel (32) und einem oberen Schenkel (34) des Basiskörpers (10) gebildet wird, ein an der Kopfseite des Basiskörpers (10) ausgebildetes Halteprofil (13) zum Abstützen der Klammer gegen das Unterteil (1) des Kabelführungskanals, gekennzeichnet durch die Merkmale: an einem Schenkel (32, 34) des Rastprofils (33) befindet sich wenigstens eine Nase (19), die im verriegelten Zustand der Überbrückungsklammer mit dem Unterteil (1) kooperiert, und ein Riegel (17), der in eine am Unterteil (1) ausgeformte Aussparung (20) greift, das Halteprofil (13) wird von einem Schenkel (38) und einer daran ausgeformten leistenförmigen Erhebung (15) gebildet.

Ferner betrifft die Erfindung einen mit der Überbrückungskammer ausgestatteten Kabelführungskanal.

## Beschreibung

Die vorliegende Erfindung betrifft eine Überbrückungsklammer zur Sicherung von Kabeln und Leitungen in Kabelführungskanälen gemäß dem Oberbegriff nach Anspruch 1.

Bei Kabelführungskanälen werden die Kabel und Leitungen in das Unterteil des Kanals gelegt und anschließend wird ein Deckel auf das Unterteil aufgerastet. Da in solchen Kabelführungskanälen in der Regel eine größere Anzahl von Kabel und Leitungen verlaufen, ist es insbesondere bei einer wandseitigen oder deckenseitigen Montage des Kanals erforderlich, ein Herausfallen der Kabel und Leitungen zu vermeiden, solange der Deckel noch nicht auf das Unterteil des Kanals aufgesetzt ist. Hierfür werden gewöhnlicherweise beidseitig mit dem Unterteil verrastbare Überbrückungsklammern verwendet, die abschnittsweise auf das Unterteil des Kabelkanals über dessen Länge aufgesetzt werden und ein Herausfallen der Kabel und Leitungen verhindern. Solche Überbrückungsklammern bleiben in der Regel auch nach der Montage des Deckels an dem Unterteil angebracht, so dass beispielsweise auch zu einem späteren Zeitpunkt Kabel ausgetauscht oder neue Kabel eingesetzt werden können, ohne dass beim Abnehmen des Deckels die Leitungen aufgrund ihres Eigengewichtes aus dem Kanal herausfallen.

Überbrückungsklammern der zuvor genannten Art sind beispielsweise aus dem deutschen Gebrauchsmuster 70 08 943 bekannt, bei dem gesonderte Zwischenstücke vorgesehen sind, auf die eine Überbrückungsklammer in zur Kanallängsrichtung paralleler Orientierung aufgesteckt werden. Bei dieser Ausführungsform werden sowohl Zwischenstücke als auch Überbrückungsklammern benötigt, was bei der Montage umständlich ist.

In der DE 33 35 884 C2 wird eine Überbrückungsklammer vorgeschlagen, die an beiden Seiten hakenförmige Eingriffsprofile aufweist, die mit Deckelhalteprofilen von Kabelführungskanälen kooperieren. Für das Einlegen von Kabeln wird zunächst eine Seite der Überbrückungsklammer in die Deckelhalteprofile eines Kabelführungskanals eingerastet. Das andere Ende bleibt gelöst, so dass von dieser Seite die Kabel und Leitungen eingesetzt werden können. Anschließend wird die Klammer auch an der anderen Seite in das Deckelhalteprofil eingerastet. Durch die beidseitige Rastverbindung ist ein einfaches Lösen der Klammer, beispielsweise für ein nachträgliches Einlegen von Kabeln für den Installateur jedoch mit einem gewissen Kraftaufwand verbunden, da die Rastverbindung zunächst gelöst werden muss. Ferner hat man festgestellt, dass die bekannten Überbrückungsklammer selbst in der Verriegelungsposition entlang des Kanals verschiebbar sind, was bei schweren Kabellasten zu Problemen führt. Wenn man bedenkt, dass viele Überbrückungsklammern über die gesamte Länge eines Kabelführungskanals angeordnet sind, ist eine Klammer mit beidseitiger Rastverbindung höchst unbefriedigend.

Der vorliegenden Erfindung liegt daher die Aufgabe zugrunde, eine Überbrückungsklammer für Kabelführungskanäle bereit zu stellen, die in der Verriegelungsposition entlang des Kanals nicht verschiebbar ist und bei der der Installateur die Klammer zum Einlegen von Kabel und Leitungen mit geringem Kraftaufwand einseitig lösen und bei Bedarf neu positionieren kann.

Diese Aufgabe wird gelöst durch eine Überbrückungsklammer gemäß Anspruch 1.

Die erfindungsgemäße Überbrückungsklammer wird zunächst auf einer Seite auf das Unterteil eines Kabelführungskanals, vorzugsweise in die Deckelhalteprofile oder Randprofile des Kabelkanals, eingesetzt. In diesem Zustand ist die Klammer entlang des Kanals verschiebbar und kann in die erforderliche Montageposition gebracht werden. Dadurch erhält man einen wesentlichen Zeitvorteil bei der Montage. Durch das Herunterklappen der Klammer greift ein am Fußende der Klammer ausgebildeter Riegel in eine am Unterteil des Kanals ausgeformte Aussparung. Die Aussparungen sind vorzugsweise direkt am Deckelhalteprofil oder an einer zusätzlich am Unterteil ausgebildeten Leiste in regelmäßigen oder unregelmäßigen Abständen eingebracht. Durch das Eingreifen des Riegels in die Aussparung wird ein Verrutschen der Klammer im verriegelten Zustand vermieden.

Die erfindungsgemäße Überbrückungsklammer besteht aus einem leistenförmigen Basiskörper an dessen Fußende ein klauenförmiges Rastprofil ausgebildet ist. Das Rastprofil wird von einem unteren Schenkel mit zwei eckständig ausgeformten Nasen, die unter die Deckelhalteprofile des Kabelführungskanals greifen und der Führung der Klammer entlang des Kanals dienen, und einem oberen Schenkel gebildet. Damit die Überbrückungsklammer beim Überführen in die Verriegelungsposition besser über die Lippen des Deckelhalteprofils geführt werden kann, sind die Nasen zum Kanalrand hin vorzugsweise abgeschrägt. In dem Schlitz zwischen dem oberen und unteren Schenkel des Fußteils wird das Deckelhalteprofil des Kanalunterteils geführt. Durch die an dem unteren Schenkel angebrachten und von unten in die Deckelhalteprofile greifenden Nasen wird ein Herausgleiten der Klammer aus den Deckelhalteprofilen des Kanals verhindert.

Die Klammer wird für die Montage zunächst schräg auf das Deckelhalteprofil des Kanals angesetzt und kann dann durch leichtes Verschieben mit dem Unterteil verrastet werden, indem der herausragende Riegel in die entsprechende Aussparung des Unterteils greift. Dadurch wird ein seitliches Verrutschen der Klammer vermieden. Die Aussparungen sind bevorzugt an einem Leistenprofil seitlich eingebracht, welches wiederum vorzugsweise direkt an dem Deckelhalteprofil ausgeformt ist. Natürlich können die Aussparungen auch an einer anderen Stelle des Unterteils ausgebildet sein, beispielsweise direkt am Unterteil oder einer getrennten Leiste. Die Aussparungen sind in Längsrichtung und in beliebigen Abständen zueinander angeordnet. Vorzugsweise befinden sich die Aussparungen an beiden Seiten des Kanalunterteils, so dass die Überbrückungsklammern beidseitig auf den Kanal aufgerastet werden können. Die bevorzugte Ausführungsform sieht eine einseitige Verrastung mit dem Kanalunterteil vor. Mit umfasst vom erfinderischen Gedanken ist jedoch auch eine beidseitige Verrastung der Klammer am Kanal, wobei sich bei dieser Ausführungsform die oben beschriebenen Rastprofile an beiden Enden, d.h. den Kopf- und Fußenden der Klammer befinden. Auch bei dieser Ausführungsform steht die Verschiebesicherung im Vordergrund, d.h. ein Verschieben der Klammer in der Verriegelungsposition soll vermieden werden.

Bei der einseitig verrastenden Überbrückungsklammer ist auf der dem Rastprofil gegenüberliegenden Seite der Überbrückungsklammer am Kopfende ein Halteprofil ausgebildet. Das Halteprofil besteht aus einem Schenkel und einer darauf ausgeformten leistenförmigen Erhebung, die zusammen mit der Abschlusskante des Basiskörpers eine Führungsfurche für die Deckelhalteprofile des Kanalunterteils bildet und gleichzeitig die Klammer gegen das Unterteil abstützt.

Zum Einlegen von Kabel und Leitungen gibt es nun mehrere Möglichkeiten: Die erste Möglichkeit besteht darin, die Überbrückungsklammer zunächst am Fußende mit dem zuvor beschriebenen Rastprofil mit dem Kanalunterteil zu verbinden. Die Klammer befindet sich bei dieser Position in Schwenkstellung und schaut schräg nach oben über den Kanalrand. In dieser Position können die Kabel und Leitungen von oben oder seitlich in den Kabelführungskanal eingelegt werden. Nach erfolgtem Einlegen der Kabel und Leitungen wird die Klammer nach unten gedrückt, wodurch das kopfseitige Halteprofil unter das Deckelhalteprofil greift.

Eine weitere Möglichkeit für ein schnelles Einlegen der Kabel besteht darin, die Klammer funktionsfertig auf beiden Seiten des Kabelführungskanals zu befestigen. Rastprofil und Halteprofil befinden sich hierbei in Verriegelungsposition. Zum Einlegen der Kabel und Leitungen wird die Klammer nun von oben nach unten in den Unterteilraum gedrückt. Beim Loslassen fällt die Klammer in Folge der Federwirkung in die Ausgangsposition zurück. Auf diese Weise können die Kabel und Leitungen schnell und elegant über die gesamte Länge des Kabelführungskanals eingesetzt werden. Durch das Halteprofil mit dessen unter das Deckelhalteprofil greifenden Schenkel und der leistenförmigen Erhebung ist ein Herausschnappen der Klammer auch bei starkem durch die Kabel und Leitungen bedingten Druck nicht möglich. Erst bei etwas stärkerer Kraftanwendung durch den Monteur kann die Klammer aus der Halteposition wieder entlassen werden.

In einer weiteren bevorzugten Ausführungsform besitzt die erfindungsgemäße Überbrückungsklammer eine seitlich am Basiskörper ausgebildete Nut. In dieser kann die Überbrückungsklammer in Längsrichtung mit dem Unterteil befestigt werden, so dass der Kanal für das Einlegen der Kabel und Leitungen offen ist. Die Klammern können auf diese Weise über die gesamte Kanallänge angebracht werden, so dass der Monteur schrittweise die Kabel in den Kanal einlegen kann, um anschließend die Klammern von der Gebrauchsposition in die Verriegelungsposition zu bringen. Hierzu wird die Klammer zunächst durch eine seitliche Drehung in Schwenkstellung gebracht. In dieser Position kann die Klammer durch einfaches Verschieben entlang des Kanals in die gewünschte Montageposition gebracht werden. Durch Herunterdrücken der Klammer, greift der am Rastprofil ausgebildete Riegel in die am Leistenprofil eingebrachte Aussparung. Auf der anderen Seite der Klammer greift das Halteprofil unter das Deckelhalteprofil des Kanalunterteils.

Die erfindungsgemäße Klammer ist somit flexibel einsetzbar und ermöglicht dem Monteur bei der Montage den größtmöglichen Spielraum zum Verlegen seiner Kabel und Leitungen. Durch die einseitige Verrastung ist ferner ein nachträgliches Einlegen von Kabel oder Leitungen in den Kanal durch leichtes Herunterdrücken der Klammer ohne weiteres möglich. Die Klammer wird lediglich am Fußende durch die Rastverbindung fixiert. Durch das am Kopfende ausgeformte Halteprofil wird ein Herausschnappen der Klammer aus den Kanal durch die Last der Kabel vermieden, ein Herunterdrücken der Klammer durch den Monteur ist jedoch jederzeit möglich. Ein Lösen einer Rastverbindung, wie bei den im Stand der Technik beschriebenen Klammern, ist nicht erforderlich.

Im Folgenden wird die Erfindung anhand der Zeichnungen näher erläutert.

Es zeigen:
- Fig. 1: eine isometrische Darstellung eines Kabelführungskanals mit einer erfindungsgemäßen Überbrückungsklammer als Querverbindung,
- Fig. 2: eine isometrische Darstellung eines Kabelführungskanals mit einer erfindungsgemäßen Überbrückungsklammer in Längsbefestigung,
- Fig. 3: eine isometrische Darstellung der erfindungsgemäßen Überbrückungsklammer bei einerseitiger Einrastung in einem Kabelführungskanal,
- Fig. 4: die in Fig. 3 gezeigte Überbrückungsklammer in Vorderansicht,
- Fig. 5: die erfindungsgemäße Überbrückungsklammer in Verriegelungsposition in einem Kabelführungskanal,
- Fig. 6: eine Detaildarstellung des Führungsprofils der Überbrückungsklammer, und
- Fig. 7: eine isometrische Darstellung der Unterseite des Halteprofils der Überbrückungsklammer.

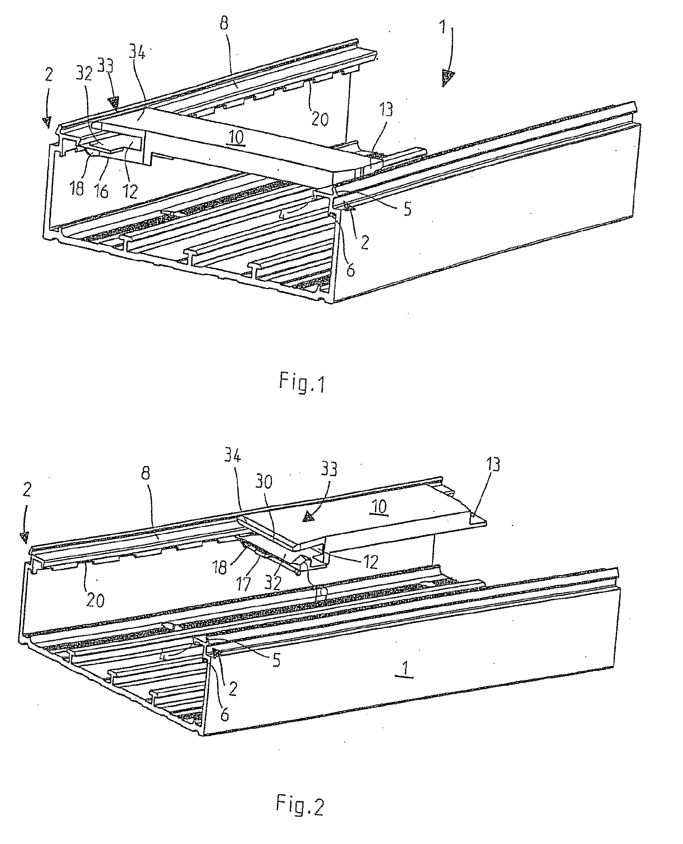

In Fig. 1 erkennt man das U-Profil eines üblichen Kabelführungskanals mit eingelegter Überbrückungsklammer. Die Überbrückungsklammer besteht aus einem Basiskörper 10 und weist an ihrem Fußende ein Rastprofil 33 zur Erzeugung einer Rastverbindung mit dem Unterteil 1 eines Kabelführungskanals auf. Das Rastprofil 33 der Überbrückungsklammer besteht im Wesentlichen aus einem Schlitz 12, der von einem oberen Schenkel 34 und einem unteren Schenkel 32 des Basiskörpers 10 gebildet wird. Der untere Schenkel 32 wird vorzugsweise zusätzlich von an der Unterseite des Schenkels 32 ausgeformten verstärkenden Stützrippen 16, 18 versteift.

Vorzugsweise ragt der untere Schenkel 32 seitlich über den Basiskörper 10 heraus, um eine größere Führungs- und Haltefläche für die Klammer bereitzustellen. An dem fußseitig ausgeformten unteren Schenkel 32 sind beidseitig Nasen 19 ausgebildet, die unter eine Lippe des Deckelhalteprofils 2 greifen können (in dieser Abbildung nicht zu sehen). Das Deckelhalteprofil 2 besteht vorzugsweise aus einem durch Lippen gebildeten Leistenprofil 6 und einem Formprofil 4. An dem Leistenprofil 6 befindet sich wenigstens eine, vorzugsweise mehrere Aussparungen 20, die zur Aufnahme des Riegels 17 des Rastprofils 33 und somit zur Befestigung der Überbrückungsklammer dient. Der fußseitig ausgeformte obere Schenkel 34 des Basiskörpers 10 stützt sich gegen den Steg 8 des Deckelhalteprofils 2 ab. Eine nach außen gewölbte weitere Lippe 5 dient der Befestigung des Deckels.

Auf der Kopfseite der Überbrückungsklammer ist ein Halteprofil 13 ausgebildet, das mit dem Deckelhalteprofil 2 kooperiert. Vorzugsweise kooperiert das Halteprofil 13 mit den Lippen des Formprofils 4.

In Fig. 2 erkennt man eine weitere Möglichkeit wie die erfindungsgemäße Überbrückungsklammer an einem Unterteil 1 eines Kabelführungskanals befestigt werden kann. Bei dieser Ausführungsform erfolgt die Befestigung der Überbrückungsklammer über eine seitliche am Basiskörper 10 verlaufende Nut. Auf diese Weise ist es möglich, die Kabel und Leitungen von oben in den Kabelführungskanal einzulegen. Nach dem Einlegen der Kabel und Leitungen wird die Überbrückungsklammer seitlich gedreht, so dass der herausragende Riegel 17 in die entsprechende Aussparung 20 des Leistenprofils 6 greift und verrastet. Zur leichteren Einführung der Klammer in die Deckelhalteprofile 2 sind die Nasen 19 an der Außenkante abgeschrägt. Zur zusätzlichen Fixierung der Klammer ist weiterhin eine Rippe 30 vorgesehen, die an der Unterseite des oberen Schenkels 34 ausgeformt ist.

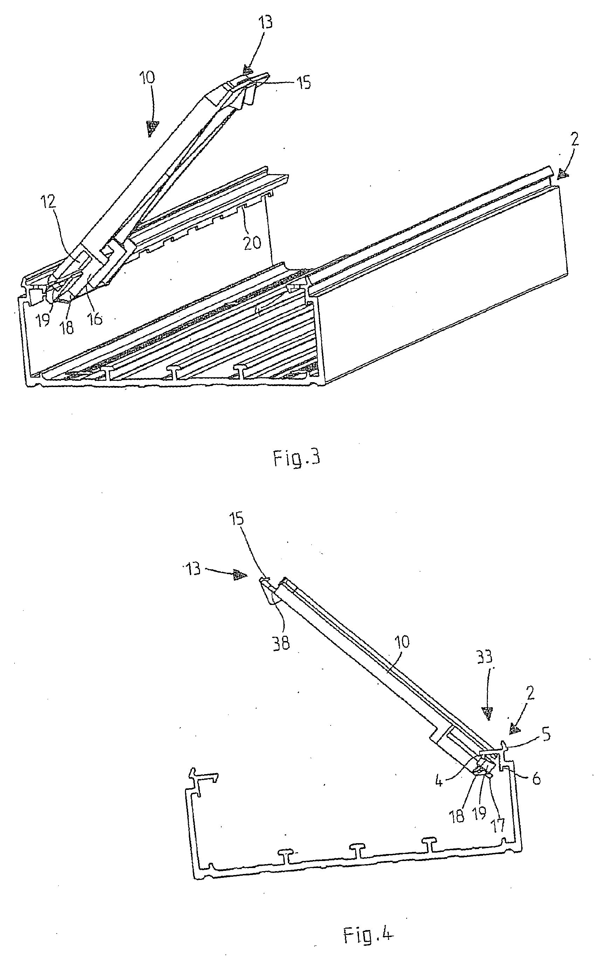

In Fig. 3 erkennt man eine weitere Möglichkeit (neben der in Fig. 2 gezeigten Ausführungsform), auf welche Weise Kabel und Leitungen in den Kabelführungskanal eingelegt werden können. Die Klammer wird hierzu zunächst auf einer Seite über das Rastprofil 33 mit dem Deckelhalteprofil 2 des Unterteils 1 des Kabelkanals auf die zuvor beschriebene Art verrastet. Die Kabel und Leitungen können von der offenen Seite in den Kabelführungskanal eingelegt werden. Nach dem Einlegen der Kabel wird die Klammer durch leichten Druck von oben auf den Basiskörper 10 nach unten gedrückt, so dass das kopfseitige Halteprofil 13 unter die Deckelhalteprofile des Unterteils 1 greift.

In Fig. 4 ist die in Fig. 3 beschriebene Klammer in Vordersicht gezeigt. Man erkennt das kopfseitige Halteprofil 13, und den Schenkel 38, auf dem die leistenförmige Erhebung 15 angeformt ist. Die Führungsnut wird durch die leistenförmige Erhebung 15 und der Außenkante des Basiskörpers 10 gebildet. Auf der Fußseite der Klammer erkennt man, wie die Nase 19 unter das U-förmige Formprofil des Deckelhalteprofils 2 greift. Zur Versteifung sind Stützrippen 16, 18 vorgesehen. Ferner erkennt man den herausragenden Riegel 17, der in die formgleiche Aussparung 20 am Leistenprofil 6 greift.

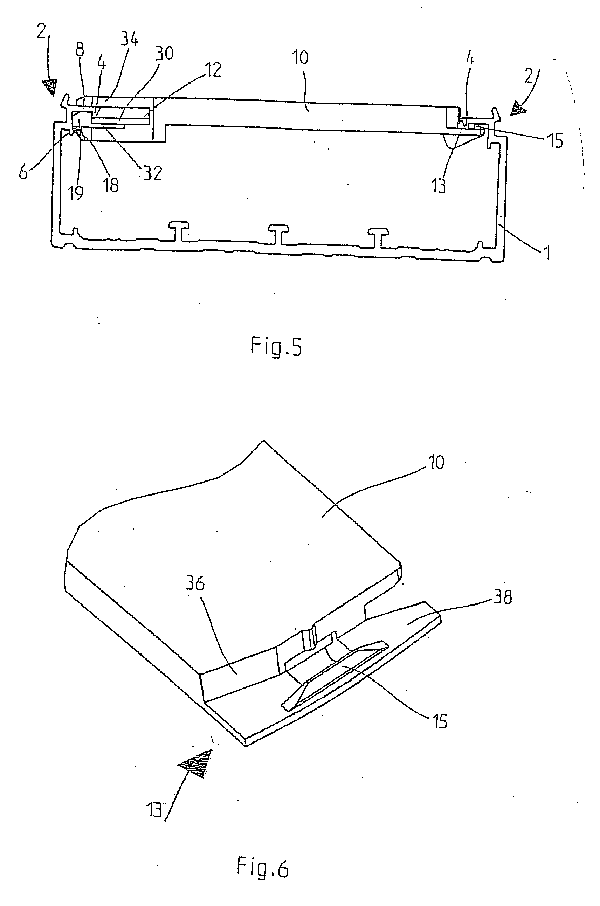

In Fig. 5 ist die Überbrückungsklammer schließlich heruntergeklappt und wird im Unterteil 1 des Kabelführungskanals verrastet. Man erkennt das fußseitige Rastprofil 33 mit dem Schlitz 12, der aus dem unteren Schenkel 32 und dem oberen Schenkel 34 gebildet wird. Der obere Schenkel 34 stützt sich im montierten Zustand der Klammer gegen den Steg 8 des Deckelhalteprofils 2 ab. Die Nase 19 greift unter das Formprofil 4 und wird auf diese Weise mit dem Unterteil 1 verrastet. Auf der Kopfseite erkennt man wiederum das Halteprofil 13, bei dem die leistenförmige Erhebung 15 unter das Formprofil 4 des Deckelhalteprofils 2 greift.

In Fig. 6 erkennt man das kopfseitige Halteprofil 13 in Detaildarstellung. Dieses besteht aus dem Schenkel 38 und der auf diesem ausgeformten leistenförmigen Erhebung 15. Durch die Abschlusskante 36 des Basiskörpers 10 und der leistenförmigen Erhebung 15 wird eine Führungsnut für die Lippen des Deckelhalteprofils 2 gebildet. Vorzugsweise ist die Abschlusskante 36 auf einer Seite abgeschrägt, um das seitliche Einführen der Klammer in das Unterteil zu erleichtern. Der Schenkel 38 ist derart ausgestaltet, dass die Klammer bei durch die Kabel und Leitungen bedingten Druck gegen das Deckelhalteprofil 2 gedrückt wird und die Kabel und Leitungen auf diese Weise gehalten werden.

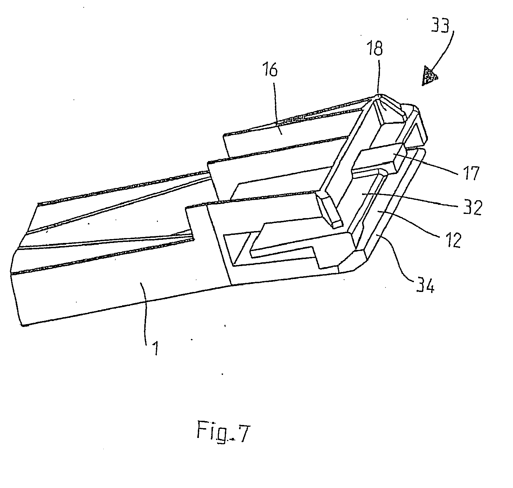

In Fig. 7 ist das fußseitige Rastprofil 33 in Detaildarstellung gezeigt. Deutlich erkennt man die in Längsrichtung verlaufende Stützrippen 16, 18. Die Stützrippen 16, 18 dienen der Stabilisierung und Versteifung der Klammer. Der Riegel 17 ist an der Unterseite des unteren Schenkels 32 angeformt und vorzugsweise leicht nach unten versetzt.

Die erfindungsgemäße Überbrückungsklammer ist wie anfangs erwähnt, aufgrund ihrer vielfältigen Ausgestaltung auf verschiedene Weise einsetzbar. Durch die einseitige Verrastung mit dem Kanal ist ein Verschieben der Klammer in der Montageposition möglich. Im verrasteten Zustand wiederum wird das Verschieben der Klammer - anders als bei den bekannten Klammern - verhindert.

Das Einlegen der Kabel und Leitungen kann durch Herunterdrücken der Klammer in den Kabelkanalinnenraum erfolgen, so dass bei nachlassendem Druck die Klammer nach oben zurückfällt. Alternativ kann die Klammer zunächst über das Rastprofil an ein Deckelhalteprofil des Kabelführungskanals einseitig befestigt werden, so dass sich die Klammer in Schwenkstellung befindet. Schließlich ist es möglich, die Klammer auch seitlich über eine Nut mit einem Deckelhalteprofil zu verbinden, so dass die Klammer nach dem Einlegen der Kabel und Leitungen die Klammer durch eine seitliche Drehung mit dem Unterteil verrastet werden kann.

Auf diese Weise ist die Klammer für verschiedene Kanaltypen und Montageanforderungen flexibel einsetzbar. Durch die einseitige Verrastung ist ein schnelles, problemloses und vor allem nachträgliches Einlegen von Kabeln und Leitungen möglich. Das Herunterdrücken der Klammer kann beispielsweise mit einer Hand erfolgen, während der Monteur mit der anderen Hand die Kabel und Leitungen einlegt.

## Patentansprüche

1. Überbrückungsklammer zur Sicherung von Kabeln und Leitungen in Kabelführungskanälen, umfassend
- einen Basiskörper (10),
- ein an der Fußseite des Basiskörpers (10) ausgebildetes Rastprofil (33) mit einem darin eingebrachten Schlitz (12) zur Befestigung der Klammer mit einem Unterteil (1) eines Kabelführungskanals, der von einem unteren Schenkel (32) und einem oberen Schenkel (34) des Basiskörpers (10) gebildet wird,
- ein an der Kopfseite des Basiskörpers (10) ausgebildetes Halteprofil (13) zum Abstützen der Klammer gegen das Unterteil (1) des Kabelführungskanals, **gekennzeichnet durch** die Merkmale:
- an einem Schenkel (32, 34) des Rastprofils (33) befindet sich wenigstens eine Nase (19), die im verriegelten Zustand der Überbrückungsklammer mit dem Unterteil (1) kooperiert, und ein Riegel (17), der in eine am Unterteil (1) ausgeformte Aussparung (20) greift,
- das Halteprofil (13) wird von einem Schenkel (38) und einer daran ausgeformten leistenförmigen Erhebung (15) gebildet.

2. Überbrückungsklammer nach Anspruch 1, **dadurch gekennzeichnet, dass** die Nasen (19) und/oder der Riegel (17) am unteren Schenkel (32) des Rastprofils (33) ausgebildet sind.

3. Überbrückungsklammer nach einem der vorhergehenden Ansprüche, **dadurch gekennzeichnet,** das fußseitige Rastprofil (33) und das kopfseitige Halteprofil (13) mit den Deckelhalteprofilen(2) des Unterteils (1) kooperieren.

4. Überbrückungsklammer nach einem der vorhergehenden Ansprüche, **dadurch gekennzeichnet, dass** an dem oberen Schenkel (34) eine Leiste (30) ausgeformt ist.

5. Überbrückungsklammer nach einem der vorhergehenden Ansprüche, **dadurch gekennzeichnet, dass** die der untere Schenkel (32) breiter ist als der Basiskörper (10) und dass die beiden Nasen (19) am unteren Schenkel (32) außen angeordnet sind.

6. Überbrückungsklammer nach einem der vorhergehenden Ansprüche, **dadurch gekennzeichnet, dass** der Riegel (17) gegenüber dem unteren Schenkel (32) nach unten versetzt ist.

7. Überbrückungsklammer nach einem der vorhergehenden Ansprüche, **dadurch gekennzeichnet, dass** der untere Schenkel (32) durch Stützrippen (16, 18) versteift wird.

8. Überbrückungsklammer nach einem der vorhergehenden Ansprüche, **dadurch gekennzeichnet, dass** die Überbrückungsklammer an ihrer Längsseite eine Nut aufweist, damit die Klammer seitlich an das Unterteil (1) befestigbar ist.

9. Überbrückungsklammer nach einem der vorhergehenden Ansprüche, **dadurch gekennzeichnet**, der Riegel (17) in Aussparungen (20) greift, die sich an den Deckelhalteprofilen (2) des Unterteils (1) befinden.

10. Überbrückungsklammer nach einem der vorhergehenden Ansprüche, **dadurch gekennzeichnet**, die Klammer über Rastprofile (33) am Kopf- und Fußende beidseitig verrastbar ist.

11. Kabelführungskanal zur Aufnahme von Kabel und Leitungen, umfassend eine Überbrückungsklammer nach einem der Ansprüche 1 bis 10.

12. Kabelführungskanal nach Anspruch 11, **dadurch gekennzeichnet, dass** das Deckelhalteprofil (2) aus einem Formprofil (4) und einem Leistenprofil (6) besteht.

13. Kabelführungskanal nach einem der vorhergehenden Ansprüche, **dadurch gekennzeichnet, dass** die Aussparungen (20) seitlich an einem Leistenprofil (6) des Deckelhalteprofils (2) ausgebildet sind.

14. Kabelführungskanal nach einem der vorhergehenden Ansprüche, **dadurch gekennzeichnet, dass** die Aussparungen (20) in regelmäßigen Abständen an den Deckelhalteprofilen (2) angebracht sind.

15. Kabelführungskanal nach einem der vorhergehenden Ansprüche, **dadurch gekennzeichnet, dass** es sich um einen Wandkanal, Deckenkanal oder Raumsäule handelt.
